**Europäisches Patentamt**

**European Patent Office**

**Office européen des brevets**

(11) Veröffentlichungsnummer: **0 067 373**
**B1**

(12) # EUROPÄISCHE PATENTSCHRIFT

(45) Veröffentlichungstag der Patentschrift:
01.04.87

(51) Int. Cl.⁴: **G 02 C 5/00**

(21) Anmeldenummer: **82104873.3**

(22) Anmeldetag: **03.06.82**

(54) **Seitensteg für Metallbrillen.**

(30) Priorität: **16.06.81 DE 3123925**

(43) Veröffentlichungstag der Anmeldung:
**22.12.82 Patentblatt 82/51**

(45) Bekanntmachung des Hinweises auf die Patenterteilung:
**01.04.87 Patentblatt 87/14**

(84) Benannte Vertragsstaaten:
**AT FR GB IT**

(56) Entgegenhaltungen:
**DE - C - 510 757**
**DE - U - 7 428 158**
**FR - A - 2 398 321**
**FR - A - 2 424 557**
**US - A - 2 080 853**

(73) Patentinhaber: **Firma Ferdinand Menrad, Oderstrasse 2,**
**D-7070 Schwäbisch Gmünd-Bettringen NW (DE)**

(72) Erfinder: **Schönhut, Kurt,**
**Konrad-Adenauer-Strasse 30 D-7070 Schwäbisch**
**Gmünd, Unterbettringen/Kirchäcker (DE)**

(74) Vertreter: **Lamprecht, Helmut, Dipl.-Ing.,**
**Corneliusstrasse 42, D-8000 München 5 (DE)**

**Beschreibung**

Die Erfindung betrifft einen Seitensteg für Metallbrillen mit einem Kunststoffpad und einer metallischen Stegstütze, welche mit einem Kupplungsende in eine Öffnung einer am Pad angeordneten Halterung einschiebbar ist, wobei das Kupplungsende mit mehreren in Einschieberichtung aufeinanderfolgenden Profilierungen versehen und die Öffnung als Durchgangsöffnung ausgebildet ist, deren Querschnitt sich in einer Querschnittsebene nach innen bis zu einem quer zur Einschieberichtung verlaufenden Rastvorsprung verringert, der zum Eingriff in eine jede der Profilierungen geeignet ist.

Ein Seitensteg dieser Art ist aus DE-U-7 428 158 bekannt, wobei in der Öffnung der Halterung ein Exzenter drehbar angeordnet ist, welcher durch Drehung in oder ausser Eingriff mit einer von mehreren Quernuten bringbar ist, die am Kupplungsende der Stegstütze ausgebildet sind. Durch den drehbaren Exzenterbolzen ist die Konstruktion relativ teuer, ausserdem besteht das Problem, dass sich der Bolzen lösen und verloren gehen kann.

Es sind auch Seitenstege bekannt, welche durch Schrauben befestigt werden, wobei die Konstruktion ebenfalls teuer ist und die Gefahr besteht, dass die Schrauben sich lösen.

Noch eine weitere Variante ist aus DE-U-1 965 985 bekannt, wobei ein in den Pad eingeformtes Metallteil in eine geschlitzte und gerillte Halterung eingesetzt wird. Nach der Positionierung des Metallteils in der Halterung wird über die Halterung eine Hülse geschoben, um die Halterung in ihrer geschlossenen, das Metallteil festlegenden Stellung zu halten.

Beim sog. Clip-in-Pad ist ein Metallkäfig vorgesehen, welcher als Federteil gestaltet ist, der dem Pad eine Schaukelbewegung ermöglicht, ihn aber andererseits sicher in seiner Halterung festhält.

Bei den letztgenannten Konstruktionen sind Metallteile vorhanden, die Schnittflächen aufweisen, was die Korrosionsanfälligkeit dieser Konstruktionen begründet, weil doubliertes Material an den Schnittflächen keine Goldschicht mehr aufweist und ein Nachgalvanisieren den Qualitätsverlust nicht ausgleichen kann. Ausserdem ist beim Clip-in-Pad keine Möglichkeit einer Höhenverstellung gegeben. Die in den Pad eingespritzten Metallteile, welche vorzugsweise im Gussverfahren hergestellt sind, können korrodieren. Bei unsachgemässer Behandlung, z.B. geringfügigem Aufdehnen des Federkörpers beim Clip-in-Pad, können sich Beschädigungen ergeben, welche nicht mehr reparierbar sind. Ausserdem sind die Konstruktionen wegen der Anzahl der erforderlichen Teile verhältnismässig teuer.

Aus der DE-A-2 819 141 ist eine Konstruktion bekannt, bei der die Halterung vollständig innerhalb des Pads angeordnet ist. Bei der aus ästhetischen Gründen zierlichen Form des Pads ist es nicht möglich, die innerhalb des Pads angeordnete Halterung so auszubilden, dass sie eine Schwenkbewegung zwischen Pad und Stegstütze zur Anpassung der Padposition an die Oberfläche der Nase ermöglicht. Die Halterung ist bei dieser Konstruktion ausserdem als dünne flache Hülse ausgebildet, in die das flache Ende der Stegstütze eingeschoben und gegebenenfalls auch verklebt wird. Das flache Ende der Stegstütze ist der Profilierung im Inneren der Hülse in Form von Viereckpyramiden satt angepasst, wodurch ebenfalls eine Beweglichkeit zwischen Stegstütze und Pad unterbunden wird.

Der Erfindung liegt die Aufgabe zugrunde, einen Seitensteg der anfangs genannten Art so auszugestalten, dass bei geringster Zahl von Einzelteilen eine preisgünstige, korrosionssichere Konstruktion geschaffen wird, bei welcher keine Teile vorhanden sind, welche verloren gehen könnten, bei der die Beschädigungsgefahr durch unsachgemässe Handhabung gering ist und bei der sich der Pad möglichst vollkommen an die Nasenform anpassen kann, ohne den optisch korrekten Sitz der Brille zu beeinträchtigen.

Die Lösung dieser Aufgabe besteht darin, dass die in den Pad eingeformte Halterung aus einem relativ harten, federelastischen Kunststoff mit hohem Rückfederverhalten und der Pad aus einem weichen, anschmiegsamen Material besteht, und dass in der Öffnung quer zur Einschieberichtung einander gegenüberliegende Rastvorsprünge angeordnet sind, die mit beidseitig an der Stegstütze angebrachten Profilierungen zusammenwirken.

Durch diese Ausgestaltung kann entsprechend der gewünschten Stützlänge ein ausgewähltes Paar der Profilierungen mit den beim Einschieben der Stegstütze elastisch ausweichenden Rastvorsprüngen in Eingriff gebracht werden. Der Exzenterbolzen wird nicht mehr benötigt, so dass es ausgeschlossen ist, dass der Seitensteg durch Verlust des Exzenterbolzens unbrauchbar wird. Das Fehlen von Schneidkanten an der Stegstütze erlaubt es, diese korrosionsbeständig in einem Stück aus Double anzufertigen. Der Pad kann sich weich an die Nasenfläche anschmiegen und zudem kann sich die Halterung und mit ihr der Pad gegenüber der Stegstütze verschwenken, so dass die Brille einen sehr angenehmen Sitz aufweist.

Anhand der in der Zeichnung dargestellten beispielsweisen Ausführungsform der Erfindung wird diese näher erläutert.

Es zeigt:

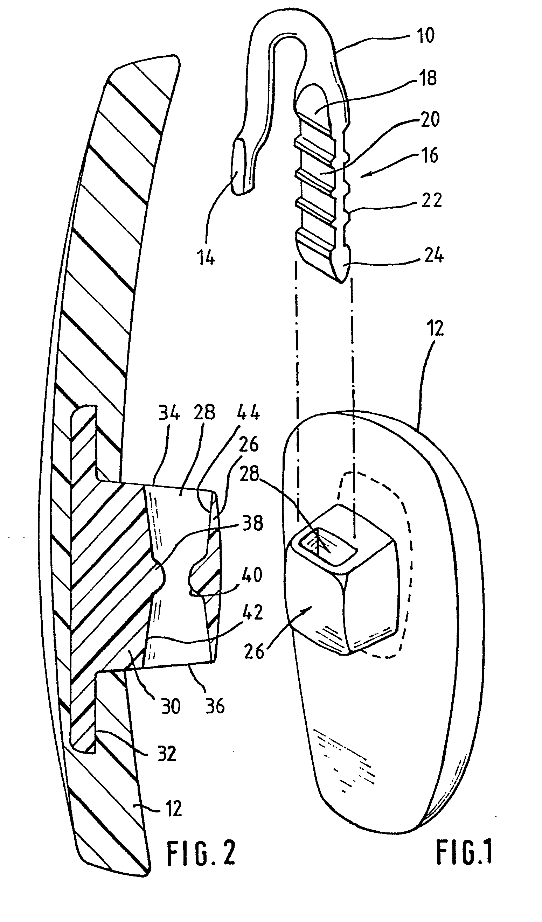

Fig. 1 eine perspektivische Darstellung der Stegstütze und des Pads vor dem Zusammenfügen und

Fig. 2 einen Schnitt durch eine Ausführungsform des Pads mit eingespritzter Halterung.

Der erfindungsgemässe Seitensteg besteht aus einer Stegstütze 10, vorzugsweise aus Doublé, und einem aus Kunststoff gefertigtem Pad 12.

Die Stegstütze 10 ist U-förmig gekrümmt und weist an einem Ende eine flach angeprägte Lötfläche 14 auf, die zur Verbindung mit dem Augenglasrand des nicht dargestellten Brillengestells dient. Der das andere Ende der Stegstütze 10 aufweisende Schenkel des U ist in einem als Kupplungsende 16 bezeichneten Bereich zu einer länglichen, rechteckigen Platte gedrückt, deren voneinander abgewandte flache Oberflächen 18 mit quer zur Längsrichtung dieses Schenkels verlaufenden Nuten 20 versehen sind, zwischen welchen Rippen 22 verlaufen. Parallel zu den Rippen 22 ist das freie Ende 24 des Kupplungsendes 16 angeschrägt.

Der Pad 12 ist mit einer Halterung 26 für die Stegstütze 10 versehen, wobei die Halterung einstückig an den Pad 12 angeformt oder aber als getrenntes Bauelement in den Pad 12 eingespritzt sein kann, wie dies beim dargestellten Ausführungsbeispiel der Fall ist. Dies hat den Vorteil, dass die Halterung 26 aus einem relativ harten Kunststoff mit hohem Rückfederverhalten angefertigt werden kann, während der Pad 12 aus einem weichen, anschmiegsamen Material bestehen kann, so dass einerseits eine angenehme Auflage des Pads ermöglicht wird, während andererseits die Elastizität der Halterung entsprechend der beabsichtigten Rastverbindung mit der Stegstütze 10 ausgelegt werden kann.

Die Halterung 26 besteht aus einem mit einer Öffnung 28 versehenen Block 30 und einem am Block 30 angeformten Teller 32, welcher in den Pad 12 eingespritzt wird.

Die Öffnung 28 ist als Durchgangsöffnung ausgebildet, wobei in der Mitte zwischen den beiden Ausmündungen 34 und 36 der Öffnung 28 an zwei einander gegenüberliegenden, zur Auflagefläche des Pads 12 annähernd parallelen Seitenflächen der Öffnung 28 zwei quer zur Durchgangsrichtung der Öffnung 28 verlaufende, rippenartige Vorsprünge 38 und 40 ausgebildet sind. Von diesen Vorsprüngen 38 und 40 aus divergieren die diese Vorsprünge 38 und 40 aufweisenden Seitenflächen 42 bzw. 44 der Öffnung 28 jeweils bis zur Mündung 34 bzw. 36, so dass das angeschrägte Ende 24 des Kupplungsendes 16 der Stegstütze 10 leicht in die Öffnung 28 eingeschoben werden kann und dabei die Seitenflächen 42 und 44 elastisch auseinanderdrückt, bis die Vorsprünge 38 und 40 in die auf das angeschrägte Ende 24 folgende Nut 20 einrasten. Wird die Stegstütze 10 weiter in die Öffnung 28 eingeschoben, können die Vorsprünge 38 und 40 in eine der nachfolgenden Nuten 20 einrasten, um so die Höhenlage des Pads 12 an der Stegstütze 10 entsprechend den jeweiligen Bedürfnissen festzulegen.

Durch die in Richtung auf die Ausmündungen 34 und 36 divergierend verlaufenden Seitenflächen 42 und 44 besteht für den Pad 12 die Möglichkeit, sich um eine zu den Vorsprüngen 38 bzw. 40 parallele Achse einzustellen, ohne seine Höhenlage an der Stegstütze 10 zu verändern.

Die vom Block 30 abgewandte Oberfläche des Tellers 32 kann mit einer Profilierung bzw. Markierung, beispielsweise einem Firmenzeichen, versehen werden, welches sichtbar bleibt, wenn der Block 30 in einen Pad 12 aus durchsichtigem Material eingebettet wird.

## Patentanspruch

Seitensteg für Metallbrillen mit einem Kunststoffpad (12) und einer metallischen Stegstütze (10), welche mit einem Kupplungsende (16) in eine Öffnung (28) einer am Pad (12) angeordneten Halterung (26) einschiebbar ist, wobei das Kupplungsende (16) mit mehreren in Einschieberichtung aufeinanderfolgenden Profilierungen (20, 22) versehen und die Öffnung (28) als Durchgangsöffnung ausgebildet ist, deren Querschnitt sich in einer Querschnittsebene nach innen bis zu einem quer zur Einschieberichtung verlaufenden Rastvorsprung (38, 40) verringert, der zum Eingriff in jede der Profilierungen (20, 22) geeignet ist, dadurch gekennzeichnet, dass die in den Pad (12) eingeformte Halterung (26) aus einem relativ harten, federelastischen Kunststoff mit hohem Rückfederverhalten und der Pad (12) aus einem weichen, anschmiegsamen Material besteht, und dass in der Öffnung (28) quer zur Einschieberichtung einander gegenüberliegende Rastvorsprünge (38, 40) angeordnet sind, die mit beidseitig an der Stegstütze (10) angebrachten Profilierungen (20, 22) zusammenwirken.

## Claim

Nose-pad connection for metal spectacles comprising a pad (12) made of synthetic resin and a metallic bridge support (10) which is insertable with a connecting end (16) into an opening (28) of a mounting support (26) provided on the pad (12), the connecting end (16) being provided with a number of positive locking elements (20, 22) following each other in the insert sliding direction, said opening (28) being designed as a passageway opening and the cross section of said opening tapers in a cross sectional plane inwardly up to a locking projection (38, 40) which extends transverse to the insert sliding direction and is suitable for engagement with each one of said positive locking elements (20, 22), characterized in that the mounting support (26) which is molded unitarily on said pad (12) is made of a relatively hard, elastic synthetic resin with high spring-back resiliency, whereas said pad (12) is made of a soft pliable material, and that locking projections (38, 40) are disposed in said opening (28) opposite each other and transversely with respect to the insert sliding direction, said locking projections cooperating with positive locking elements (20, 22) provided on both sides of the bridge support.

## Revendication

Connexion pour lunettes métalliques avec une plaquette nasale en matière plastique (12) et un support métallique (10) de la connexion qui peut être introduit par une extrêmité d'accouplement (16) dans une ouverture (28) d'un support (26) disposés sur la plaquette (12), l'extrémité d'accouplement (16) étant pourvue de plusieurs profilages (20, 22) successifs dans le sens d'introduction et l'ouverture (28) ayant la forme d'une ouverture de passage dont la section en coupe transversale se rétrécit vers l'intérieur jusqu'à une saillie d'arrêt (38, 40) transversale au sens d'introduction qui peut s'engrener dans chacun des profilages (20, 22), caractérisée en ce que le support (26) formé dans la plaquette (12) est en une matière plastique relativement dure et élastique à haute capacité de retour élastique, que la plaquette (12) est constituée d'un matériau mou et forgeable et en ce que sont placées dans l'ouverture (28) en travers du sens d'introduction des saillies d'arrêt (38, 40) placées l'une en face de l'autre qui agissent avec des profilages (20, 22) placés des deux côtés du support de connexion (10).

FIG. 2

FIG.1